# EUROPEAN PATENT SPECIFICATION

(11) **EP 0 646 480 B1**
(45) Date of publication and mention of the grant of the patent: **11.12.1996**
(21) Application number: 94306127.5
(22) Date of filing: 19.08.1994
(51) Int. Cl.: B60C 11/04

(54) **Pneumatic tires**
Luftreifen
Pneumatiques

(30) Priority: 09.09.1993 JP 224447/93; 07.06.1994 JP 125171/94
(43) Date of publication of application: 05.04.1995
(73) Proprietor: BRIDGESTONE CORPORATION, Tokyo 104 (JP)
(72) Inventor: Iwasaki, Shizuo, Kodaira-shi, Tokyo (JP); Hayashi, Kazuo, Kodaira-shi, Tokyo (JP)
(74) Representative: Whalley, Kevin

(56) References cited:
- EP-A- 0 503 404
- EP-A- 0 508 090
- DE-A- 3 624 408
- DE-A- 3 916 711

## Description

The present invention relates to pneumatic tires, and in particular relates to a pneumatic tire which is designed to reduce noise while retaining good drainage performance and good cornering performance, by optimizing the sectional area and position of a circumferential wide groove arranged in the tire tread.

A pneumatic tire generally has a tread pattern provided with circumferential grooves and lateral grooves in the tread in order to satisfy drainage performance and cornering performance. In particular, the circumferential grooves are effective during running on a wet road surface because they have a function of draining water entering the grounding region (ground contact region) rearward rapidly.

As a result of the provision of the circumferential grooves, however, noise by air column resonance arises which is easily caused by the compressed air, which is compressed in the tube-like space between the circumferential grooves in the tread and a road surface, flowing suddenly through the circumferential grooves by intermittent pumping effect.

It is an object of the present invention to provide a pneumatic tire which is designed to reduce noise while retaining good drainage performance and good cornering performance, by optimizing the sectional area and the position of a circumferential wide groove arranged in the tire tread.

According to the invention, there is provided a pneumatic tire having successively outside a radial carcass comprising at least one ply, a belt comprising at least two rubber coated layers laminated with cross cord arrangement, at least one belt reinforcing layer comprising a rubber coated layer of cords extending substantially in parallel with the circumference of the tire, and a tread reinforced by the belt and the belt reinforcing layer, characterized in that the tread has one circumferential wide groove extending along the tire circumference and having a sectional area of not less than 160 mm², and said circumferential wide groove is arranged to be offset from the tire equatorial plane in the widthwise direction of the tire by a distance of 1/30 - 1/10 of the tire grounding width.

Further, it is preferable that said circumferential wide groove is arranged to be offset in the inward direction of a vehicle from the tire equatorial plane viewing the tire mounted on a vehicle.

The invention will be further described, by way of example only, with reference to the accompanying drawings, in which:
Fig. 1 is a widthwise sectional view of one embodiment of a pneumatic tire according to the present invention;
Fig. 2 is a schematic view of a grounding print of a tire according to the invention; and
Fig. 3 is a widthwise sectional view of another embodiment of a pneumatic tire according to the invention.

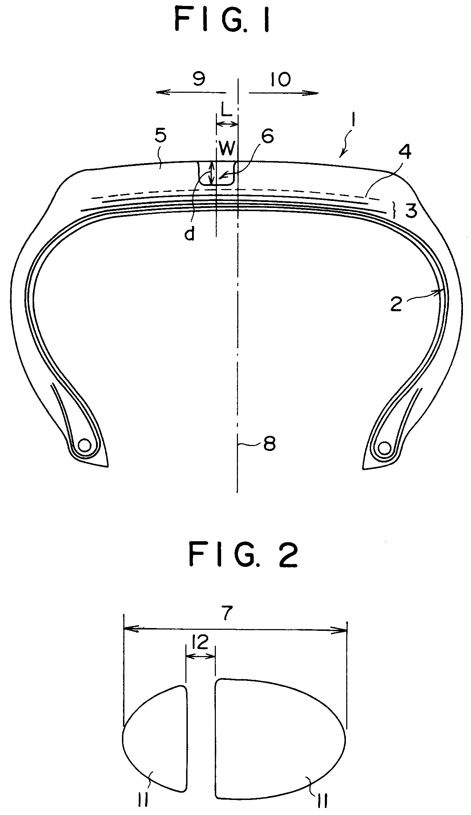

Fig. 1 shows a widthwise cross section of a typical pneumatic tire according to this invention, in which reference numeral 1 indicates the pneumatic tire, 2 a radial carcass thereof, 3 a belt, 4 a belt reinforcing layer, 5 a tread, 6 a circumferential wide groove, 7 (see Fig. 2) tire grounding width (ground contact width), 8 the tire equatorial plane, 9 the inward direction of a vehicle on which the tire is mounted, and 10 the outward direction of a vehicle.

Fig. 2 shows the tire grounding width 7 in more detail, wherein regions 11 corresponding to a tire grounding area are separated by a region 12 corresponding to the width of the circumferential wide groove 6.

This pneumatic tire 1 has outside the radial carcass 2 comprising two plies the belt 3 comprising two rubber coated layers laminated with cross cord arrangement, that is with their cord crossing one another, one belt reinforcing layer 4 having substantially the same width as the belt 3 and comprising a rubber coated layer of organic fiber cords extending substantially in parallel with the circumference of the tire, and the tread 5 reinforced by the belt 3 and the belt reinforcing layer 4, and the tread is provided with one circumferential wide groove 6 extending along the tire circumference and having a sectional area of not less than 160 mm².

The circumferential wide groove 6 is arranged to be offset from the tire equatorial plane 8 in the widthwise direction by a distance L of 1/30 - 1/10 of the tire grounding width 7, and is preferably arranged to be offset in the inward direction 9 of a vehicle from the tire equatorial plane 8 when the tire is mounted on a vehicle. The tire grounding width 7 here is defined as the grounding width under the grounding condition of tire inflation pressure and tire load according to JIS, and a typical grounding print (ground contact print) with this tire grounding width 7 is shown in Fig. 2. The distance L between the tire equatorial plane 8 and the circumferential wide groove 6 is defined as the distance between the tire equatorial plane 8 and the widthwise center line of the circumferential wide groove 6 by measuring in the widthwise direction of the tire.

Further it is preferable that the circumferential wide groove 6 has a width W of not less than 22 mm and not more than 3/10 of the tire grounding width 7, and a depth d of not less than 7 mm within the sectional area of not less than 160 mm². When the width W of the circumferential groove is less than 22 mm and the depth is not less than 7 mm, block rigidity around the groove may not be sufficient, and when the width is more than 3/10 of the tire grounding width 7, steering may feel dull. When the depth d of the circumferential wide groove 6 is less than 7 mm, sufficient drainage performance may not be obtained. The sectional shape of the circumferential wide groove can be selected from rectangular, triangular, round, trapezoidal and so on. Furthermore, when the circumferential wide groove 6 is formed in a tire having a narrow grounding width 7, the negative ratio of the tread becomes too large and the net grounding area becomes too small, and the cornering performance is largely degraded. In this connection, the sectional width of the tire is preferably not less than 205 mm, and more preferably not less than 225 mm. In addition to the circumferential wide groove 6, the tread can be provided with at least one circumferential groove having smaller sectional area (of less than 100 mm², for example 38 mm²) when necessary.

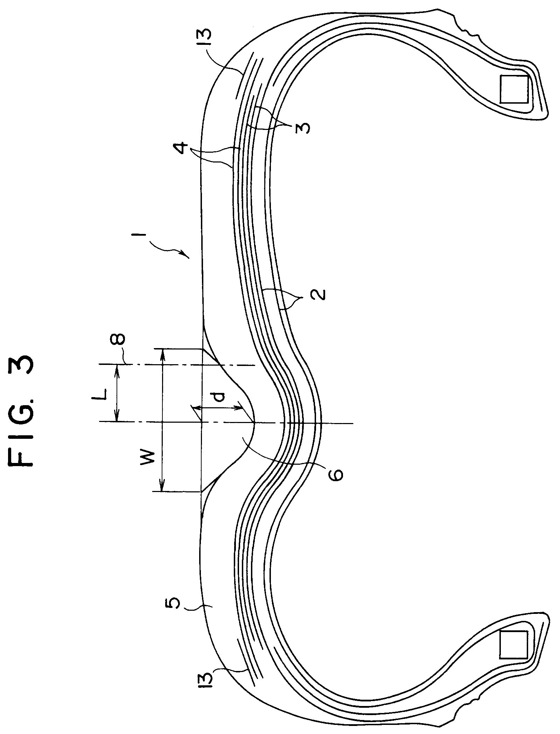

The carcass 2, the belt 3 and the belt reinforcing layer 4 are of conventional sectional shape as shown in Fig. 1, but the carcass 2, the belt 3 and the belt reinforcing layer 4 can be made concave inward in the radial direction of the tire together with the tread 5 (as shown for example in Fig. 3). In particular, this shape is preferable when the tire cannot be provided with a sufficiently thick tread rubber where the circumferential wide groove is formed. Further, while the drawings do not show lateral grooves or sipes, these can be formed in this invention when necessary as in conventional tires.

A circumferential groove arranged in a tread of a pneumatic tire contributes to drainage performance, but has the disadvantage that it generates air column resonance sound easily in the grounded circumferential groove and is a source of noise. This air column resonance sound is generated mainly by the following. That is, it is thought that a tube-like space is formed when the circumferential groove comes into contact with the road surface and the air in the space is compressed by grounding, and the difference of air pressure between the stepping-in side and the stepping-out side of the tire grounding surface occurs in said space, and sudden flow of the air in the space caused by this difference of air pressure generates the air column resonance sound. Accordingly, one way to restrain the air column resonance sound is to restrain the sudden flow of the air in said space outward by preventing the difference of the air pressure in said space from occurring. In this connection, the inventors have studied the manner of arranging the circumferential groove which contributes to drainage performance and restraining the air column resonance sound which is the disadvantage of the circumferential groove as mentioned above.

First, in order to reduce the air column resonance sound, the sectional area of the circumferential groove was formed to be not less than 160 mm², which was considerably larger than that of a conventional circumferential groove so that it might be difficult for the difference of air pressure to occur. As a result, the air column resonance sound was largely reduced, but there occurred a new problem that sufficient cornering force could not be obtained and cornering performance was degraded because the negative ratio was large and the grounding area of the tire was largely decreased.

Accordingly, secondly, it was studied whether cornering performance could be enhanced by changing the position of the circumferential groove having large sectional area.

As a result, it appeared that when the tire grounding area was divided into an inner tread portion and an outer tread portion viewing the tire mounted on a vehicle by the equatorial plane, the larger the ratio of the grounding area of the inner tread portion compared with the whole tire grounding area was made, the more the cornering performance was enhanced. Accordingly, it was found that it is preferable for cornering performance to arrange the circumferential groove having large sectional area to be offset to the inner tread portion side from the equatorial plane viewing the tire mounted on a vehicle and the grounding area of the inner tread portion was made as large as possible.

As mentioned above, by optimizing the sectional area and the position of the circumferential groove arranged in the tread, the cornering performance and drainage performance was enhanced and the noise was reduced. However, since the effect of draining water entering the tire grounding region rearward, which is an advantage of the circumferential groove, was not sufficient when the position of said circumferential groove was largely offset inward of the vehicle, the optimized range of the position of the circumferential groove needed to be defined.

The pneumatic tire 1 according to this invention is provided in the tread 5 with a circumferential wide groove 6 extending around the tire circumference and having a sectional area of not less than 160 mm², and the circumferential wide groove 6 is arranged to be offset from the tire equatorial plane 8 in the widthwise direction of the tire by a distance L of 1/30 - 1/10 of the tire grounding width 7, and in particular the circumferential wide groove 6 is arranged to be offset in the inward direction 9 of a vehicle from the tire equatorial plane 8 viewing the tire mounted on the vehicle. As a result, the air column resonance sound can be restrained, the outer tread portion can retain sufficient grounding area, and the groove has a sufficient effect to drain water entering the tire grounding region rearward.

Examples of pneumatic tires according to this invention will be described below with reference to the drawings.

### Example 1

A pneumatic tire used as example 1 has a sectional shape as shown in Fig. 1 and a tire size of 255/40R17, and has outside a radial carcass 2 comprising two rubber coated plies of rayon cords a belt 3 comprising two rubber coated layers laminated with cross cord arrangement each of which has a cord angle of 25° with respect to the tire equatorial plane, one belt reinforcing layer 4 having substantially the same width as the belt 3 and comprising a rubber coated layer of nylon cords extending substantially in parallel with the circumference of the tire, and the tread 5 reinforced by the belt 3 and the belt reinforcing layer 4, wherein the tread is provided with one circumferential wide groove 6 extending along the tire circumference and having a sectional area of 240 mm² (width: 30 mm, depth: 8 mm, sectional shape: rectangle). The circumferential wide groove 6 is arranged to be offset in the inward direction 9 of a vehicle from the equatorial plane 8 by a distance (L = 20 mm) of 1/10 of a tire grounding width 7 (200 mm) viewing the tire mounted on the vehicle.

### Example 2

A pneumatic tire used as example 2 has substantially the same structure as the example 1 except that the sectional area of the circumferential wide groove 6 is 160 mm² (width: 20 mm, depth: 8 mm, sectional shape: rectangle).

### Example 3

A pneumatic tire used as example 3 has a sectional shape as shown in Fig. 3 and a tire size of 225/50ZR16, and has outside a radial carcass 2 having an up-down structure of two rubber coated plies of rayon cords a belt 3 comprising two rubber coated layers laminated with cross cord arrangement each of which has a cord angle of 25° with respect to the tire equatorial plane, two belt reinforcing layers 4 each comprising a rubber coated layer of nylon cords wound spirally around the circumference of the tire across the whole belt width, and the tread 5 reinforced by the belt 3 and the belt reinforcing layers 4. Further this tire is provided with narrow layers 13 covering both edges of the belt for assisting high-speed running durability. The tread is provided with one circumferential wide groove 6 extending along the tire circumference and having a sectional area of 900 mm² (width: 50 mm, depth: 18 mm, sectional shape: semicircular). The circumferential wide groove 6 is arranged to be offset in the inward direction 9 of a vehicle from the equatorial plane 8 by a distance (L = 18.5 mm) of 1/10 of a tire grounding width 7 (185 mm) viewing the tire mounted on the vehicle.

### Example 4

A pneumatic tire used as example 4 has substantially the same structure as the example 3 except that the sectional area of the circumferential wide groove 6 is 200 mm² (width: 25 mm, depth: 8 mm, sectional shape: semicircular).

A pneumatic tire used as comparative example 1 has substantially the same structure as the tire of the example 1 except that a circumferential groove 6 having a sectional area of 150 mm² is arranged on the equatorial plane.

A pneumatic tire used as comparative example 2 has substantially the same structure as the tire of the example 1 except that a circumferential groove 6 having a sectional area of 200 mm² is arranged on the equatorial plane.

Tests were made on the above tires with respect to noise and cornering performance.

The noise test was evaluated by measuring sound pressure level at each running speed of a vehicle running at varied speeds when a microphone is set at certain distance from a vehicle and calculating the sound pressure at a speed of 50 km/h from these measured values. This evaluation is based on the tire noise test method according to JASO (Japanese Automobile Standard Organization) C606.

The cornering performance test was evaluated by feeling by a skilled test-driver driving a vehicle with marking out of 10.

Table 1 shows the test results. In Table 1, values of the noise are indicated by reduced sound pressure level on the basis of the sound pressure level of the comparative example 1 as a control. Also the larger is the value of the cornering performance, the better is the performance.

**Table 1**

| | Comp. exmpl 1 | Comp. exmpl 2 | Exmpl 1 | Exmpl 2 | Exmpl 3 | Exmpl 4 |
|---|---|---|---|---|---|---|
| Noise (db) | Control | - 1.5 | - 1.7 | - 1.5 | - 2.8 | - 1.6 |
| Cornering performance | 6 | 4 | 7 | 6 | 6 | 7 |

The test results show that the tires of examples 1 - 4 have reduced noise and enhanced cornering performance in comparison with the tires of comparative examples 1 and 2.

By means of the pneumatic tires 1 of this invention, in which one circumferential wide groove 6 extending along the tire circumference and having a sectional width of not less than 160 mm² is arranged to be offset in the tire widthwise direction from the equatorial plane 8 by the distance of 1/30 - 1/10 of the tire grounding width 7, and in particular arranged to be offset in the inward direction 9 of a vehicle from the equatorial plane 8 viewing the tire mounted on a vehicle, the tire noise can be reduced because of restraining air column resonance sound.

Furthermore the cornering performance can be retained because the grounding area of the inner tread portion producing large cornering force can be retained.

Furthermore by arranging the circumferential wide groove, sufficient drainage performance can be obtained because the effect of draining water entering the tire grounding region rearward is sufficient.

## Claims

1. A pneumatic tire (1) having successively outside a radial carcass (2) comprising at least one ply, a belt (3) comprising at least two rubber coated layers laminated with cross cord arrangement, at least one belt reinforcing layer (4) comprising a rubber coated layer of cords extending substantially in parallel with the circumference of the tire, and a tread (5) reinforced by the belt (3) and the belt reinforcing layer (4), characterized in that the tread (5) has one circumferential wide groove (6) extending along the tire circumference and having a sectional area of not less than 160 mm², and said circumferential wide groove is arranged to be offset from the tire equatorial plane (8) in the widthwise direction of the tire by a distance (L) of 1/30 - 1/10 of the tire grounding width (7).

2. A pneumatic tire as claimed in claim 1, characterized in that said circumferential wide groove (6) is arranged to be offset in the inward direction (9) of a vehicle from the tire equatorial plane (8) viewing the tire mounted on a vehicle.

3. A pneumatic tire as claimed in claim 1 or 2, characterized in that said circumferential wide groove (6) has a width (W) of not less than 22 mm and not more than 3/10 of the tire grounding width (7), and a depth (d) of not less than 7 mm.

4. A pneumatic tire as claimed in any of claims 1 to 3, characterized in that the sectional width of the tire is not less than 205 mm.

## Patentansprüche

1. Luftreifen (1), der nacheinander an der Außenseite folgende Komponenten hat: eine Radialkarkasse (2), die wenigstens eine Kordlage aufweist, einen Gürtel (3), der wenigstens zwei gummibeschichtete Lagen aufweist, die mit einer Anordnung von quer verlaufenden Korden laminiert sind, wenigstens eine Gürtel-Verstärkungslage (4), die eine gummibeschichtete Lage von Korden aufweist, die im wesentlichen parallel zum Umfang des Reifens verlaufen, und eine Lauffläche (5), die durch den Gürtel (3) und die Gürtel-Verstärkungslage (4) verstärkt ist, dadurch gekennzeichnet, daß die Lauffläche (5) eine breite Längsrille (6) hat, die über den Umfang des Reifens verläuft und eine Querschnittfläche von nicht weniger als 160 mm² hat, und daß die breite Längsrille so angeordnet ist, daß sie gegenüber der Äquitorialebene (8) des Reifens in der Richtung der Breite des Reifens um einen Abstand (L) von 1/30 bis 1/10 der Bodenaufstandsbreite (7) des Reifens versetzt ist.

2. Luftreifen nach Anspruch 1, dadurch gekennzeichnet, daß die breite Längsrille (6) so angeordnet ist, daß sie in der nach innen weisenden Richtung (9) eines Fahrzeugs gegenüber der Äquatorialebene (8) des Reifens versetzt ist, bei dem an einem Fahrzeug montierten Reifen gesehen.

3. Luftreifen nach Anspruch 1 oder 2, dadurch gekennzeichnet, daß die breite Längsrille (6) eine Breite (W) von nicht weniger als 22 mm und nicht mehr als 3/10 der Bodenaufstandsbreite (7) des Reifens und eine Tiefe (d) von nicht weniger als 7 mm hat.

4. Luftreifen nach einem der Ansprüche 1 bis 3, dadurch gekennzeichnet, daß die Schnittbreite des Reifens nicht weniger als 205 mm beträgt.

## Revendications

1. Bandage pneumatique (1) comportant successivement à l'extérieur une carcasse radiale (2) comprenant au moins une nappe, une ceinture (3) comprenant au moins deux couches revêtues de caoutchouc laminées avec des câblés entrecroisés, au moins une couche de renforcement de ceinture (4) comprenant une couche revêtue de caoutchouc de câblés s'étendant de façon pratiquement parallèle à la circonférence du pneumatique, et une bande de roulement (5) renforcée par la ceinture (3) et la couche de renforcement de la ceinture (4), caractérisé en ce que la bande de roulement (5) comporte une large rainure circonférentielle (6), s'étendant le long de la circonférence du pneumatique et ayant une surface de section non inférieure à 160 mm², ladite large rainure circonférentielle étant agencée de sorte à être décalée du plan équatorial du pneumatique (8) dans la direction de la largeur du pneumatique d'une distance (L) représentant de 1/30 à 1/10 de la largeur de contact au sol du pneumatique (7).

2. Bandage pneumatique selon la revendication 1, caractérisé en ce que ladite large rainure circonférentielle (6) est agencée de sorte à être décalée du plan équatorial du pneumatique (8) dans la direction allant vers l'intérieur (9) d'un véhicule, le pneumatique étant vu, monté sur un véhicule.

3. Bandage pneumatique selon les revendications 1 ou 2, caractérisé en ce que ladite large rainure circonférentielle (6) a une largeur (W) non inférieure à 22 mm et ne dépassant pas les 3/10 de la largeur de contact au sol du pneumatique (7), et une profondeur (d) non inférieure à 7 mm.

4. Bandage pneumatique selon l'une quelconque des revendications 1 à 3, caractérisé en ce que la largeur de section du pneumatique n'est pas inférieure à 205 mm.
